# FASCICULE DE BREVET EUROPEEN

(11) **EP 2 193 099 B1**
(45) Date de publication et mention de la délivrance du brevet: **12.04.2017**
(21) Numéro de dépôt: 08831392.9
(22) Date de dépôt: 19.09.2008
(51) Int. Cl.: C01B 3/50, C10J 3/84, C10K 1/10, C10K 3/06, C10J 3/00, C10K 1/00, C10K 3/00

(54) **DISPOSITIF DE TRAITEMENT D'UN GAZ DE SYNTHÈSE**
VORRICHTUNG ZUR BEARBEITUNG EINES SYNTHESEGASES
DEVICE FOR THE TREATMENT OF A SYNGAS

(30) Priorité: 21.09.2007 FR 0757777
(43) Date de publication de la demande: 09.06.2010
(73) Titulaire: Europlasma, 33100 Bordeaux (FR)
(72) Inventeur: MICHON, Ulysse, F-33800 Bordeaux (FR); BELLAT, Léandre, 33520 Bruges (FR); EDME, Erika, F-33000 Bordeaux (FR)
(74) Mandataire: Cabinet Plasseraud
(86) Numéro de dépôt international: PCT/EP2008/062541
(87) Numéro de publication internationale: WO 2009/037339

(56) Documents cités:
- EP-A- 0 153 235
- WO-A-2004/087840
- WO-A-2007/042559
- US-A- 3 622 493
- US-A1- 2003 024 806

## Description

La présente invention concerne un dispositif de traitement d'un gaz de synthèse. Elle concerne également un système de traitement de déchets ou de biomasse équipé d'un tel dispositif de traitement.

On connaît des procédés permettant l'obtention d'un gaz de synthèse.

La gazéification autothermique est par exemple un procédé bien connu dont le mécanisme principal cherche à décomposer, en sous stoechiométrie d'oxygène, par injection de vapeur, des chaînes carbonées telles que celles contenues dans de la biomasse, les résidus forestiers, les déchets ménagers et hospitaliers, le bois souillé et tout autre déchet à fort potentiel organique, en vu d'obtenir un gaz de synthèse combustible et valorisable.

L'avantage certain que procure la gazéification est qu'en l'absence de combustion complète, la partie organique se décompose sous la forme d'un gaz combustible dont le Pouvoir de Combustion Inférieur (PCI) est d'autant plus élevé qu'est minimisé la présence de dioxyde de carbone, de vapeur d'eau, d'azote qui sont des molécules peu efficientes pour être valorisées dans une production électricité, de biocarburant ou être utilisées en chimie organique.

De plus, la présence de goudron et de carbone solide dans le gaz de synthèse présente un inconvénient majeur pour les éléments en aval du réacteur de gazéification. En effet, ces particules peuvent se condenser facilement dans les conduites du traitement du gaz de synthèse induisant leur obstruction ainsi que des risques de feu spontané à l'ouverture de ces conduites pour leur maintenance. Par ailleurs, ces éléments solides peuvent encrasser les pales des turbines à gaz et les moteurs à gaz réduisant durablement leur performance et augmentant la fréquence de leur maintenance.

Les technologies de préparation du gaz de synthèse avant valorisation consistent dans leur grande majorité à retirer les particules solides (goudrons et du carbone solide) dès la sortie du réacteur de gazéification autothermique par filtration (filtre cyclonique, filtre à manche, électro-filtres), condensation (laveur à eau, laveur à l'huile), ou de craquer les particules solides par des réactions catalytique (usage d'oxygène pur et de vapeur) ou encore par réformage par haute températures (usage d'oxygène pur).

La gazéification autothermique a une limitation intrinsèque en température ce qui limite de fait le PCI du gaz de synthèse produit. Les contraintes imposées par la conception des réacteurs de gazéification autothermique, les matériaux réfractaires qui les constituent, la présence d'éléments mobiles (râteaux en acier réfractaire, sables, billes métalliques) permettant d'homogénéiser la charge supportent difficilement des températures supérieures à 850°C.

La limitation de capacité de traitement est aussi induite par la variabilité de l'entrant en composition, granulométrie, pour son taux d'humidité et sa teneur en minéraux, en métaux lourds.

Ces facteurs amènent à opérer les procédés de gazéification à des températures comprises entre 600°C et 850°C pour être économiquement viable. Par conséquent, à ces températures il faut accepter l'obtention d'un gaz de synthèse avec un PCI moyen puisqu'il contient certes du monoxyde de carbone et de l'hydrogène en tant qu'espèces dominantes, mais aussi des sous-produits non valorisables tels que du dioxyde de carbone, de la vapeur d'eau et de l'azote.

En ce qui concerne les particules solides en suspension dans le gaz de synthèse, la démarche consiste à les extraire du gaz de synthèse et à les recycler vers le réacteur en tant que source d'énergie thermique. Cette action qui consiste à retirer du procédé de gazéification ce potentiel carbone disponible initialement dans la matière organique à traiter induit une limitation du rendement carbone ayant pour conséquence directe, une limitation du PCI.

Les risques sont également d'ordre environnemental et sanitaire pour les opérateurs. En effet, l'extraction des particules solides en suspension dans le gaz de synthèse génère des boues résiduaires dans le système de traitement du gaz de synthèse. Ces boues sont donc à évacuer du site vers des décharges ou des incinérateurs de déchets industriels. Les opérateurs sont donc exposés à des produits cancérigènes lors de la maintenance des laveurs ou des stations d'épuration.

Les flux de déchets multiphasique tel que le mélange avec les cendres en bas de réacteur de gazéification, et les boues résiduaires (goudrons/carbone solide/eau/huile) issues de la ligne de traitement des gaz de synthèse avant valorisation représentent un coût économique important en ce qui concerne leur évacuation du site vers des filières d'enfouissement ou de destructions.

On connaît encore un autre procédé de gazéification qui est la gazéification directe par plasma. Ce procédé consiste à réaliser une attaque directe du matériau organique par plasma pour le convertir en un gaz de synthèse de haute pureté à forte température.

La configuration générale d'un tel procédé est habituellement la suivante : Une ou plusieurs outils plasma délivrent un ou plusieurs écoulements plasma dans un four alimenté par des matériaux à gazéifier et/ou à vitrifier. Le four est alors le siège des réactions thermochimiques de transformation des matériaux introduits, sous l'action directe et/ou indirecte de l'écoulement plasma. Les phases liquides et gazeuses, qui résultent de la synthèse ou du traitement par plasma sont ensuite récupérées pour d'éventuels traitements ultérieurs mettant en oeuvre des techniques existantes.

Les composants essentiels de telles installations, à l'exception des outils plasma mis en oeuvre dans le procédé, comprennent un dispositif d'injection de matière solide pulvérulente ou de liquide ou encore de produits pâteux (boues de step, boues pétrolifères).

L'attaque directe d'une matière entrante à forte teneur en organique n'est pas économiquement viable dans la mesure où l'extraction de la part d'humidité contenue dans le matériau organique induit une consommation d'électricité moins pertinente que l'usage d'énergie thermique recyclé du procédé.

Par ailleurs l'usage d'un four unique, garni de réfractaire, devant faire face à des phases liquides, solides et gazeuses induit des modes de fonctionnement limitant le débit de l'entrant ou la variabilité de l'entrant.

En définitive, c'est la partie du four devant faire face au minéral liquide qui résiste le moins longtemps à la corrosion/imprégnation des réfractaires. C'est donc le fond du four qui oblige à l'arrêt du procédé de gazéification pour assurer sa maintenance.

Le mélange plasma/matériaux à gazéifier et/ou à vitrifier ne concerne pas la totalité des matériaux, le traitement thermochimique relevant principalement d'un processus indirect (rayonnement thermique provenant des parois réfractaires du four portées à haute température sous l'action du plasma). En conséquence, le transfert énergétique entre le plasma et les matériaux n'est pas optimisé.

Par ailleurs, la fabrication du four nécessite l'utilisation de matériaux réfractaires dont l'érosion est très sensible aux variations de température engendrées par des besoins énergétiques variables correspondant à la composition chimique variable des matériaux entrant, ainsi que par le retrait périodique de l'outil plasma pour cause de changement d'électrodes. De plus, la nature chimique des gaz résultant du traitement plasma peut aussi limiter la durée de vie des réfractaires, par exemple lorsqu'il s'agit de gaz chlorés.

EP 0 153 235 divulgue un procédé et une installation de production de gaz de synthèse dans lequel on produit tout d'abord, dans un premier réacteur de gazéification avec production, en plus de monoxyde de carbone et de l'hydrogène utiles, des espèces dites "fatales" telles que du carbone non converti, des hydrocarbures et des goudrons puis, dans un second réacteur, une conversion à haute température des espèces fatales en hydrogène et monoxyde de carbone. L'élévation de température dans le réacteur de conversion est réalisé par insufflation dans ce dernier d'un gaz préalablement porté à très haute température dont le débit et la température sont réglés de façon à élever la température moyenne du mélange gazeux dans le second réacteur à un niveau suffisant pour y effectuer la conversion des espèces fatales. Le moyen de chauffage du gaz est constitué avantageusement par une torche à plasma comprenant deux électrodes décalées dans le sens de circulation du gaz et entre lesquelles se forme un arc électrique soufflé par le gaz. L'objectif de la présente invention est donc de proposer un étage de gazéification indirecte de matériaux organiques par plasma en vue de la transformation d'un gaz de température moyenne, ensemencé de particules solides telles que des particules de goudron et/ou de carbone solide, issu d'un réacteur de gazéification ou de pyrolyse autothermique, afin d'en obtenir un gaz de synthèse d'une haute pureté, renforcé dans son potentiel carbone, et dont les principaux constituants sont le monoxyde de carbone et le dihydrogène.

A cet effet, l'invention concerne un dispositif de traitement d'un gaz de synthèse selon la revendication 1.

On entend par l'expression « axe de propagation sensiblement colinéaire avec l'axe principal de la torche» que l'axe de propagation du dard plasma est soit colinéaire avec, ou confondu avec, l'axe de la torche, soit que le volume d'espace occupé en moyenne dans le temps par le dard plasma a son axe confondu avec l'axe principal de la torche plasma. En effet, sous l'effet des forces exercées par le flux de gaz de synthèse introduit dans l'enceinte d'introduction, l'extrémité du dard plasma peut être placée de part et d'autre de l'axe principal de la torche, toutefois ce dard plasma occupe en moyenne dans le temps une position confondue avec l'axe principal de la torche.

On entend par l'expression « axe longitudinal du réacteur sensiblement colinéaire avec l'axe de propagation» que l'axe longitudinal est soit colinéaire avec, ou confondu avec, l'axe de propagation, soit qu'il est aligné à peu prés sur cet axe.

On entend par l'expression « placé en aval de », placé au-delà de, dans la direction de propagation du dard plasma.

Dès lors, qu'il est possible de séparer les flux solide, liquide, gazeux dans un dispositif de gazéification de l'art antérieur, permettant une gestion simple et rustique des matériaux organiques contenus dans de la biomasse ou des déchets, ceci dans des conditions opérationnelles et économiques maîtrisées, le dispositif de traitement de la présente invention voit son intérêt dans sa grande flexibilité et son adaptation à toutes les situations rencontrées dans la conduite de procédé de gazéification, dans un unique objectif: renforcer le potentiel utile du carbone contenu dans le gaz de synthèse à traiter et faire tendre la composition de ce gaz de synthèse vers uniquement deux éléments majoritaires, à savoir le monoxyde de carbone (CO) et le dihydrogène (H₂).

Il n'est pas, par conséquent, nécessaire de connaître la composition initiale du gaz de synthèse à traiter.

Il peut être appliqué un ajustement instantané de la qualité du gaz de sortie par réglage de la température du dard plasma issu de la torche à plasma. L'ajustement des paramètres opérationnels de la torche est techniquement réalisable dans un temps inférieur à la seconde.

Par ailleurs, la montée en température du gaz de synthèse n'induit pas de diminution du monoxyde de carbone par oxydation avec de l'air. En effet, même si le dard plasma était réalisé avec de l'air comme gaz plasmagène, le dard plasma n'est pas une flamme et ne nécessite aucun apport d'air de combustion pour générer de la chaleur. La dard plasma avec ses 5000°K en moyenne, est un flux de matière gazeuse ionisé, en extinction, électriquement neutre, ensemencé d'espèces telles que des électrons, ions, atomes, radicaux ayant une forte réactivité chimique. Ces derniers iront préférentiellement se ré-associer avec les espèces libérées par le craquage des molécules inintéressantes du gaz de synthèse à traiter monté en température. Ainsi les molécules tri-atomiques (CO₂, H₂O) et celles comptant encore plus d'atomes (CH₄, CₙHₘ), qui ont un faible potentiel de liaison atomique se rompent pour former des espèces stables dans le champs de températures considéré et tendent à produire du monoxyde de carbone (CO) et du dihydrogène (H₂) supplémentaire.

Dans différents modes de réalisation particuliers de ce procédé de traitement d'un gaz de synthèse, chacun ayant ses avantages particuliers et susceptibles de nombreuses combinaisons techniques possibles:
- on introduit dans l'enceinte d'introduction et/ou dans le réacteur au moins un fluide pour ajuster la composition du gaz de synthèse à traiter,

L'introduction dudit au moins un fluide peut être réalisée par au moins un injecteur, au moins un orifice d'injection d'un fluide de protection, la torche à plasma ou une combinaison de ces éléments.

Avantageusement, ce fluide peut être choisi dans le groupe comprenant de l'eau, du dioxyde de carbone et une combinaison de ces éléments.
- on diminue la vitesse du mélange gaz de synthèse/dard plasma à la paroi interne de l'enceinte d'introduction et/ou du réacteur.

La réduction de la vitesse de ce mélange peut être obtenue par l'introduction d'un fluide de protection tangentiellement à la paroi de l'enceinte d'introduction et/ou du réacteur, ce fluide étant à température ambiante. Ce fluide permet également de protéger les matériaux réfractaires dont sont équipés avantageusement l'enceinte d'introduction et le réacteur.

Cette réduction de vitesse peut encore être obtenue par une augmentation de la section de passage du dard plasma avec la présence d'une partie évasée dans l'enceinte d'introduction afin d'optimiser l'injection dudit au moins un fluide d'ajustement de la composition du gaz de synthèse à traiter.
- on accélère le gaz de sortie dans la partie aval du réacteur avant l'extraction de celui-ci par le port de sortie,
- on trempe le gaz de sortie pour le figeage de celui-ci,

On fige ainsi les espèces constitutives du gaz de sortie empêchant ainsi une éventuelle recombinaison de ces espèces, laquelle conduirait à une diminution des espèces majoritaires H₂ et CO.
- on introduit tangentiellement aux parois de l'enceinte d'introduction et/ou du réacteur, sur au moins une partie de ces parois, un fluide de protection à température ambiante,

Ce fluide de protection permet de protéger les parois de l'enceinte d'introduction et/ou du réacteur du dard plasma.
- on mesure la température du gaz de sortie et on ajuste la température du dard plasma pour contrôler la conversion dudit gaz de synthèse en gaz de sortie.

On peut qualifier le dispositif de la présente demande de système ayant une configuration « en ligne », c'est-à-dire la torche à plasma, puis le dispositif d'injection puis le réacteur, par opposition avec la configuration classique où le réacteur est couplé simultanément (en « parallèle ») à la torche et au dispositif d'injection du matériau à traiter.

Cette configuration en ligne présente de nombreux avantages, notamment une grande simplicité d'opération, un effet d'aspiration du gaz de synthèse par le dard plasma assurant par la même un mélange intime du gaz de synthèse et du dard plasma mais aussi un entraînement du mélange gaz de synthèse/dard plasma le long d'une droite (l'axe de propagation) ce qui minimise les éventuelles interactions entre ce mélange surchauffé et les parois de l'enceinte d'introduction et du réacteur.

Le mélange intime du gaz de synthèse et du dard plasma permet par ailleurs un transfert d'énergie direct entre le dard plasma et le gaz de synthèse ce qui permet non seulement une consommation moindre d'énergie mais également d'atteindre des températures du mélange gaz de synthèse/dard plasma plus élevées qu'avec les dispositifs de l'art antérieur.

Dans différents modes de réalisation particuliers de ce dispositif pour traiter un gaz de synthèse, chacun ayant ses avantages particuliers et susceptibles de nombreuses combinaisons techniques possibles:
- le dispositif comporte au moins un injecteur de fluide pour ajuster la composition du gaz de synthèse à traiter, ledit au moins un injecteur étant destiné à introduire le fluide sensiblement dans la direction de l'écoulement du mélange gaz de synthèse/dard plasma,
- les injecteurs étant placés dans la partie aval de l'enceinte d'introduction et/ou dans la partie amont du réacteur, cette partie aval comporte une portion évasée dans le sens de l'axe de propagation pour diminuer la vitesse du mélange gaz de synthèse/dard plasma et optimiser l'injection du fluide,
- l'enceinte d'introduction et le réacteur comportent des orifices d'injection d'un fluide de protection, ces orifices étant reliés à un circuit d'injection de ce fluide,
- le dard plasma ayant un diamètre d, le port d'entrée comporte un orifice d'introduction du gaz de synthèse dont le diamètre D est tel que le rapport D/d est supérieur ou égal à 10,

Ce rapport entre le diamètre de l'orifice d'introduction et le diamètre du dard plasma permet d'éviter une perte de charge à l'interface port d'entrée/volume interne de l'enceinte d'introduction. On évite ainsi une mise en pression du gaz de synthèse lors de son introduction pouvant résulter en un moins bon couplage du gaz de synthèse et du dard plasma.

A titre purement illustratif, le diamètre d du dard plasma étant de 50 mm, le diamètre D de l'orifice d'introduction est de 800 mm.
- le port de sortie est relié à au moins un moyen de figeage du gaz de sortie.

Ce moyen de figeage comprend, par exemple, au moins un échangeur thermique qui permet de tremper le gaz de sortie.

L'invention concerne encore un système de traitement de déchets ou de biomasse comprenant au moins un premier étage de traitement des déchets ou de la biomasse recevant lesdits déchets ou ladite biomasse et générant un gaz de synthèse et un deuxième étage de traitement couplé à ce premier étage pour recevoir ledit gaz de synthèse.

Selon l'invention, le deuxième étage est un dispositif de traitement du gaz de synthèse tel que décrit précédemment.
Ce système permet de produire un gaz de sortie qui est un gaz de synthèse épuré contenant majoritairement des espèces H₂ et CO. Ce gaz de synthèse épuré par torche à plasma à arc non transféré, d'un pouvoir calorifique plus élevé qu'il ne l'était avant traitement, a une valeur d'usage qui le destine avantageusement à une production électrique, une production de biocarburant ou un usage en chimie organique, par exemple, pour la production de polymère de synthèse.

L'invention concerne par conséquent également un système de production d'énergie électrique à partir de déchets ou de biomasse comprenant au moins une turbine à gaz ou au moins un moteur à gaz. Selon l'invention, ce système de production d'énergie électrique est équipé d'un système de traitement de déchets ou de biomasse tel que décrit précédemment. Ladite au moins une turbine à gaz, ou ledit au moins un moteur à gaz, est actionné par ledit gaz de sortie généré par le système de traitement de déchets ou de biomasse.

L'invention concerne encore un système de production d'un carburant ou d'un polymère de synthèse à partir de déchets ou de biomasse, ce système comprenant au moins un réacteur catalytique. Selon l'invention, ce système est équipé d'un système de traitement de déchets ou de biomasse tel que décrit précédemment.

De préférence, le réacteur catalytique générant un produit gazeux résiduel, ce système comprend un circuit de rebouclage relié d'une part au réacteur catalytique pour récupérer le produit gazeux résiduel et d'autre part, à au moins un des éléments choisis dans le groupe comprenant au moins un injecteur, au moins un orifice d'injection, la torche à plasma et une combinaison de ces éléments pour introduire le produit gazeux résiduel dans le dispositif de traitement. Ce circuit de rebouclage comporte un compresseur pour comprimer ce produit gazeux résiduel avant introduction dans le dispositif.

Ce réacteur de catalyse est de préférence un réacteur permettant la réaction dite de Fischer-Tropsch, c'est-à-dire la production d'hydrocarbures par réaction d'un mélange comprenant au moins du monoxyde de carbone et de l'hydrogène en présence d'un catalyseur. Ce procédé est un procédé industriel bien connu qui ne sera pas décrit ici.

Les catalyseurs mis en oeuvre peuvent être de diverses natures et comprennent généralement au moins un métal choisi dans le groupe comprenant le fer, le cobalt, le ruthénium et le vanadium.

Le métal est typiquement dispersé sur un support qui peut comprendre une matière minérale poreuse telle qu'un oxyde choisi dans le groupe comprenant l'alumine, la silice, l'oxyde de titane, la zircone, les terres rares et des combinaisons de ces éléments.

Le catalyseur peut de manière connue comporter également un ou plusieurs agents d'activation choisis dans au moins un des groupes I à VII de la classification périodique.

Le réacteur catalytique est, à titre purement illustratif, un réacteur de type colonne à bulles.

Le gaz d'échappement ou le produit gazeux résiduel de la catalyse étant réintroduit, ou recyclé, dans le dispositif de traitement par le circuit de rebouclage, on dispose ainsi d'un système de production d'énergie électrique ou de carburant de synthèse peu polluant.

L'invention sera décrite plus en détail en référence aux dessins annexés dans lesquels:
- la figure 1 est une vue en perspective d'un dispositif de traitement d'un gaz de synthèse
- la figure 2 est une vue partielle et en coupe de l'enceinte d'introduction du dispositif de la Figure 1;
- la figure 3 représente schématiquement un système de production d'énergie électrique à partir de déchets ou de biomasse intégrant le dispositif de traitement de la Figure 1;
- la figure 4 représente une vue partielle et en coupe transversale d'une enceinte d'introduction d'un dispositif de traitement d'un gaz de synthèse;
- la figure 5 représente une vue partielle et en coupe longitudinale de l'enceinte d'introduction de la Figure 4 ;
- la figure 6 représente une vue partielle et en coupe transversale d'une enceinte d'introduction d'un dispositif de traitement d'un gaz de synthèse selon l'invention ;

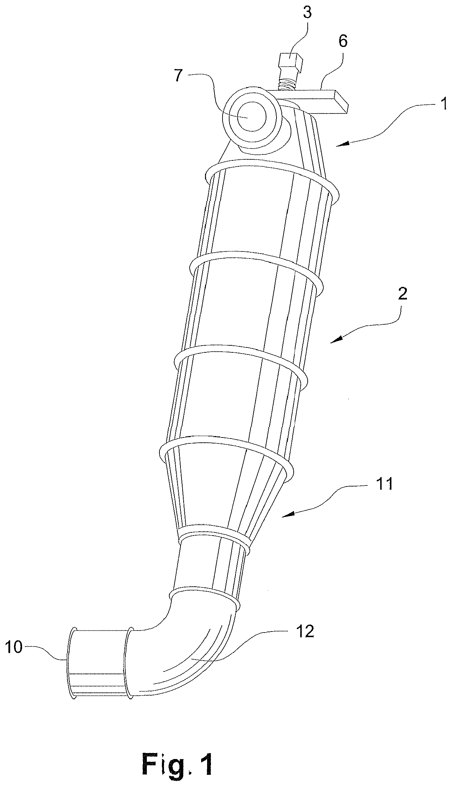

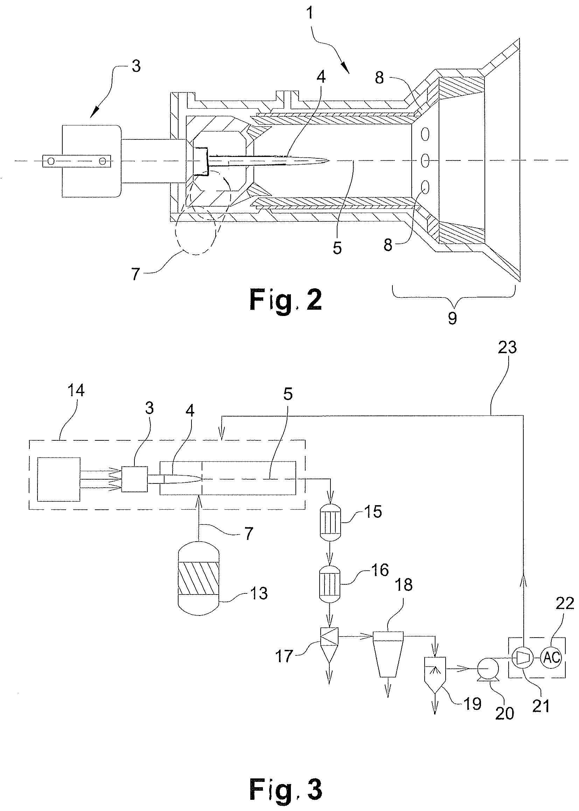

Les Figures 1 et 2 montrent un dispositif de traitement d'un gaz de synthèse. Ce dispositif qui forme un système en ligne, comporte une enceinte d'introduction 1 à laquelle est relié un réacteur 2.

L'enceinte d'introduction 1 et le réacteur 2 présentent chacun un volume interne délimité par des parois, ces parois étant recouvertes, côté interne, de matériaux réfractaires à haute tenue en température, par exemple à base de chrome/corindon. Ces matériaux réfractaires permettent notamment de réduire les pertes thermiques.

L'enceinte d'introduction 1 et le réacteur 2 qui sont ici réalisés en matériau métallique, sont refroidis par un circuit externe de fluide sous pression, ce fluide étant par exemple de l'eau déminéralisée. Toutefois, le dispositif est conçu pour ne pas présenter de point froid susceptible de constituer une zone de condensation des particules présentes dans le gaz de synthèse.

L'enceinte d'introduction 1 comporte une torche plasma 3 à arc non transféré, encore appelée torche à arc soufflé. Cette torche 3 est destinée à générer un dard plasma 4 ayant un axe de propagation 5 sensiblement colinéaire avec l'axe principal de la torche 3.

L'utilisation d'une telle torche 3 permet non seulement d'obtenir un dard plasma présentant une température très élevée, typiquement comprise entre 2000 et 5000°C en fonction de la puissance de la torche mise en oeuvre, mais assure également une indépendance complète entre le volume interne de l'enceinte d'introduction 1 et la torche plasma 3. L'enceinte d'introduction 1 comporte en conséquence une vanne d'isolement 6 refroidie permettant d'isoler la torche 3 de l'enceinte d'introduction 1. Il est alors possible d'intervenir sur la torche 3 sans mise à l'air de l'ensemble du dispositif.

Le dispositif comporte avantageusement un moyen de permutation automatique d'une première torche à arc transféré avec une seconde pour remplacer une torche nécessitant une maintenance ou pour augmenter la puissance de la torche. Ce moyen de permutation automatique peut, à titre purement illustratif, être à actionnement hydraulique.

L'enceinte d'introduction 1 comporte de préférence des orifices d'injection d'un fluide de protection (non représentés). Ces orifices sont reliés à un circuit d'injection de ce fluide. Ce circuit peut comprendre un compresseur pour injecter le fluide de protection sous forme pressurisée.

Les orifices d'injection sont orientés de sorte que le fluide est injecté tangentiellement à la paroi interne de l'enceinte d'introduction 1 de manière à envelopper le dard plasma 4 délivré par la torche 3 et éviter que le dard ne lèche directement celle-ci, ce qui nuirait à son intégrité. Le fluide de protection peut être un gaz à température ambiante qui est de préférence le gaz de synthèse. Il peut encore s'agir d'un liquide tel que de l'eau ou de l'huile. Dans ce dernier cas, il peut s'agir d'huile de biomasse, d'huile de moteur ou encore d'huile de friture.

L'enceinte d'introduction 1 comprend également un port d'entrée 7 placé en aval de la torche plasma 3 pour l'introduction du gaz de synthèse à traiter à proximité du dard plasma 4. Ce port d'entrée 7 qui présente ici la forme d'un coude, est orienté de manière à introduire le gaz de synthèse selon une direction distincte de l'axe de propagation 5 du dard plasma 4 pour établir une zone de mélange turbulent entre le dard plasma et le gaz de synthèse. Cette zone de mélange turbulent permet d'assurer un mélange intime entre le gaz de synthèse à traiter et le dard plasma 4. Le gaz de synthèse est ici introduit perpendiculairement à l'axe de propagation du dard plasma.

De manière plus générale, l'angle formé entre l'axe principal du coude et l'axe de propagation 5 du dard plasma résultera de calculs et d'expérimentations prenant en compte les paramètres du dard plasma 4 généré par la torche 3 à arc non transféré et des flux à traiter (gaz de synthèse et composants d'ajustement de la composition de ce gaz). Cet angle pourra être compris à titre purement illustratif entre environ 90° et 135°.

L'axe de propagation 5 du dard plasma est orienté en sorte de diriger le mélange gaz de synthèse/dard plasma vers le réacteur 2 dans lequel le gaz de synthèse sera le siège de réactions conduisant à sa transformation en gaz de sortie.

Par ailleurs, en fonction de la répartition initiale des principaux composants (C,H,O,) dans les matériaux organiques présents dans les déchets ou la biomasse conduisant au gaz de synthèse à traiter, il est possible que la disparition des goudrons, de l'eau et du dioxyde de carbone par traitement du gaz de synthèse dans le dispositif de la présente invention ne génère pas suffisamment de monoxyde de carbone (CO) ou d'hydrogène dans le gaz de sortie pour une exploitation énergétique significative.

Des injecteurs 8 sont par conséquent placés sur l'enceinte d'introduction 1 pour introduire un ou plusieurs fluides en vue d'ajuster la composition du gaz de synthèse à traiter. Ces injecteurs peuvent, par exemple, être des buses d'injection d'un gaz tel que du CO₂ ou des nébuliseurs dans le cas d'injection d'un liquide tel que de l'eau. Il peut encore s'agir d'une combinaison de ces éléments.

Ces injecteurs 8 sont de préférence placés de manière à introduire les matériaux sensiblement dans la direction de l'écoulement du mélange gaz de synthèse/dard plasma.

Ces fluides sont intrinsèquement disponibles sur site, puisque recyclés des étages aval du procédé de traitement de la présente invention.

Afin d'optimiser l'injection de ces fluides, l'enceinte d'introduction 1 comporte dans sa partie aval une portion évasée 9 dans le sens de l'axe de propagation 5 du dard plasma permettant de diminuer la vitesse du dard plasma 4. Cette portion évasée 9 est ici une tuyère.

Le réacteur 2 a une forme allongée sensiblement cylindrique et comporte dans sa partie aval un port de sortie 10 du gaz de sortie. La géométrie cylindrique du réacteur 2 est conçue pour avantageusement limiter la vitesse du mélange gaz de synthèse/dard plasma au niveau de la paroi du réacteur 2, cette vitesse étant induite par la vitesse du dard plasma en sortie de la torche 3 (typiquement 400 m/s). La génération d'un film de protection sur la paroi du réacteur et/ou de l'enceinte d'introduction par l'introduction d'un fluide de protection permet également de réduire la vitesse du mélange gaz de synthèse/dard plasma au niveau de ces parois. Il est en effet connu que les matériaux réfractaires protégeant la paroi interne du réacteur 2 et de l'enceinte d'introduction présentent une faible résistance aux frottements (de l'ordre de 10 m/s).

L'axe longitudinal de ce réacteur 2 est sensiblement colinéaire avec l'axe de propagation 5 du dard plasma de manière à limiter les contacts entre le dard plasma et les parois du réacteur 2.

Ce réacteur 2 constitue une zone de transformation thermique ou thermochimique du gaz de synthèse à traiter en vue de sa conversion en gaz de sortie. Cette zone résulte du mélange intime du gaz de synthèse à traiter et du dard plasma opéré dans l'enceinte d'introduction 1. La longueur de ce réacteur 2, ou four, est déterminée afin d'optimiser le temps de séjour des matériaux à synthétiser ou à traiter, temps de séjour nécessaire à l'accomplissement des réactions thermochimiques.

Le réacteur 2 comporte également des orifices d'injection d'un fluide de protection, ces orifices étant reliés à un circuit d'injection de ce fluide.

Le réacteur 2 comporte, de préférence, dans sa partie aval une restriction 11 reliée au port de sortie 10. Cette restriction permet d'accélérer le gaz de sortie avant son extraction par le port de sortie 10.

Cette accélération permet d'obtenir une vitesse suffisante pour envoyer le gaz de sortie dans un échangeur thermique (non représenté) relié au port de sortie 10. Cet échangeur permet de tremper le gaz de sortie et de figer les espèces constitutives du gaz de sortie.

Entre le port de sortie 10 et la restriction 11 est placé un carneau 12 recouvert intérieurement de matériaux réfractaires.

Le dispositif comporte au moins un capteur (non représenté) pour mesurer la température du gaz de sortie de manière à ajuster la qualité du gaz de sortie par réglage de la température du dard plasma 4 issu de la torche à plasma 3. L'ajustement des paramètres opérationnels de la torche plasma 3 est techniquement réalisable dans un temps inférieur à la seconde. Ce capteur peut être un pyromètre optique ou une sonde thermique montée sur la paroi du carneau 12.

L'enceinte d'introduction 1 et le réacteur 2 peuvent comporter des brides, respectivement au niveau du port d'entrée 7 et du port de sortie 10, permettant un montage dudit dispositif sur un système plus complexe tel qu'un système de traitement de déchets ou de biomasse ou de production d'énergie électrique à partir de déchets ou de biomasse (Figure 3). Ces brides ont une forme choisie dans le groupe comprenant une forme rectangulaire et une forme cylindrique.

Un mode de mise en oeuvre du gaz de sortie issu du procédé de traitement d'un gaz de synthèse va maintenant être décrit.

La Figure 3 représente schématiquement un système de production d'énergie électrique à partir de déchets ou de biomasse selon un mode de réalisation particulier de l'invention.

Ce système comprend un premier étage 13 de traitement des déchets ou de biomasse. Ce premier étage reçoit des déchets ou de la biomasse à l'entrée et génère en sortie un gaz de synthèse. Cet étage peut de manière connue être un réacteur de gazéification autothermique ou un réacteur de gazéification mono-étagé par plasma thermique. Le gaz de synthèse est envoyé vers un dispositif de traitement 14 du gaz de synthèse tel que décrit précédemment, lequel permet de produire un gaz de sortie. En sortie de ce dispositif, le gaz a une température comprise entre 1150°C et 1300°C.

Le gaz de sortie est envoyé vers un premier échangeur thermique 15 pour figer ce gaz et le refroidir à une température comprise ente 400 et 600 °C. Le gaz de sortie ainsi traité est alors envoyé vers un deuxième échangeur thermique 16 en sortie duquel sa température avoisine les 100 à 200°C.

Le gaz de sortie pénètre alors dans une unité de dépoussiérage 17 permettant de capter les particules avant d'être envoyé dans un filtre à manche 18. Enfin, un laveur de gaz 19 qui permet de solubiliser un polluant gazeux dans un liquide est mis en oeuvre pour éliminer notamment les traces de dioxyde de soufre ou de chlore. Un compresseur 20 permet de mettre le gaz de sortie ainsi traité en surpression sur une turbine à gaz 21. Le gaz de sortie actionne la turbine à gaz 21 qui est reliée à un alternateur 22 qui va transformer l'énergie mécanique en énergie électrique.

La turbine à gaz 21 peut être remplacée par un simple moteur à gaz si le débit du gaz de sortie n'est pas suffisamment important. De préférence, la turbine à gaz (ou le moteur à gaz) générant un gaz d'échappement, le système comprend un circuit de rebouclage 23 relié d'une part à cette turbine à gaz (ou à ce moteur à gaz) pour récupérer le gaz d'échappement et d'autre part, à au moins un des éléments choisis dans le groupe comprenant au moins un injecteur, au moins un orifice d'injection, la torche à plasma et une combinaison de ces éléments, pour introduire le gaz d'échappement dans le dispositif de traitement 14. Le circuit de rebouclage 23 comporte par ailleurs un compresseur (non représenté) pour comprimer le gaz d'échappement avant introduction dans le dispositif. Ce gaz d'échappement est typiquement du dioxyde de carbone.

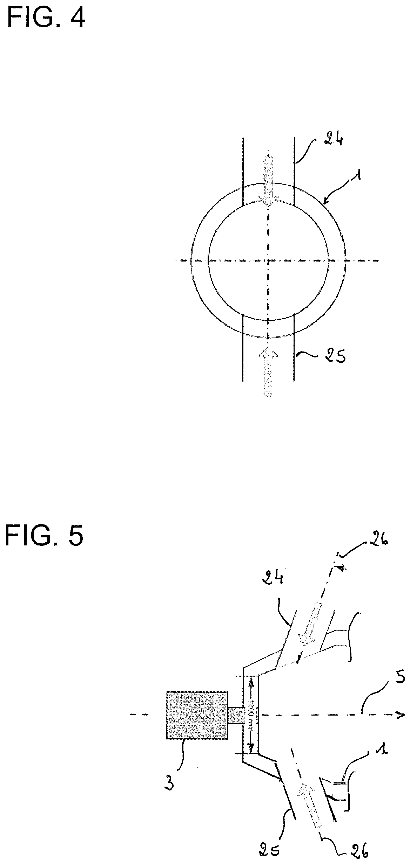

Les figures 4 et 5 montrent une vue partielle et en coupe d'une enceinte d'introduction d'un dispositif de traitement d'un gaz de synthèse. Les éléments des Figures 4 et 5 portant les mêmes références que ceux des Figures 1 à 3 représentent les mêmes objets. Cette enceinte d'introduction 1 diffère de celle présentée ci-dessus en ce qu'elle comporte non pas un seul port d'entrée 7 du gaz de synthèse à traiter mais deux ports d'entrée 24, 25 qui sont placés en vis-à-vis et en aval de la torche plasma 3 à arc non transféré.

Les ports d'entrée 24, 25 qui présentent ici une forme générale de coude sont orientés de manière à introduire le gaz de synthèse, ou des gaz de synthèse distincts, selon une direction distincte de l'axe de propagation 5 du dard plasma généré par ladite torche 3 de manière à introduire une zone de mélange turbulent entre le dard plasma 4 et le ou les gaz de synthèse. L'axe principal 26 du coude de chaque port d'entrée 24, 25 peut être perpendiculaire à cet axe de propagation 5 du dard plasma ou au contraire être incliné de sorte que le ou les gaz introduits sont envoyés en amont de l'enceinte d'introduction 1 de manière à augmenter le temps de séjour du ou de ces gaz de synthèse dans l'enceinte d'introduction 1.

Pour augmenter encore le temps de séjour du ou des gaz à traiter dans l'enceinte d'introduction 1, les ports d'entrée 24, 25 peuvent être placés de manière diamétralement opposée par rapport au centre de l'enceinte d'introduction 1 de manière à provoquer une mise en rotation de ce ou ces gaz de synthèse introduits. Les ports d'entrée 24, 25 sont alors décalés l'un par rapport à l'autre transversalement.

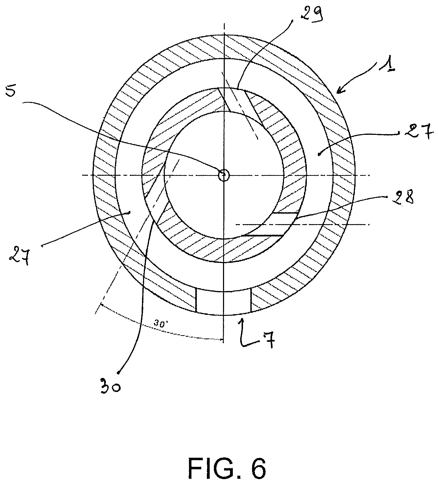

La figure 6 représente une vue partielle et en coupe transversale d'une enceinte d'introduction d'un dispositif de traitement d'un gaz de synthèse selon l'invention. Cette enceinte d'introduction comporte un seul port d'entrée 7 relié au conduit d'amenée du gaz de synthèse à traiter par ledit dispositif de traitement. Toutefois, ce port d'entrée 7 est relié à une pré-chambre 27, encore appelée chambre de distribution, qui est placée dans l'épaisseur de la paroi de l'enceinte d'introduction 1. Cette dernière a pour objet de modifier la direction et d'uniformiser les vitesses d'écoulement du gaz de synthèse à traiter pénétrant dans le port d'entrée 7 de l'enceinte d'introduction. Les champs de vitesse étant homogénéisés dans cette chambre de distribution 27, il est possible de transférer le gaz de synthèse ainsi obtenu en aval de la torche à plasma, dans une direction distincte de l'axe de propagation en le distribuant sur 3 orifices 28-30. La forme des orifices 28-30 et leurs orientations sont avantageusement choisis pour induire un effet vortex sur le gaz de synthèse ainsi introduit afin d'augmenter significativement le temps de séjour dans le volume de l'enceinte d'introduction 1 situé en aval du port d'entrée 7. Compte tenu des faibles vitesses d'émergence du gaz de synthèse par les orifices 28-30, c'est parce que ce flux de gaz est mis en présence d'un dard plasma 4 (forte viscosité et grandes vitesses) que le vortex peut exister en aval dans le réacteur 2.

Cette augmentation du temps de séjour du gaz de synthèse permet avantageusement de faire le réacteur 2 plus court ce qui rend le dispositif de traitement plus compact.

De manière plus générale, l'enceinte d'introduction 1 comporte une chambre de distribution 27 entourant le volume intérieur de cette enceinte 1 dans lequel est destiné à se propager le dard plasma 4. Cette chambre de distribution est d'une part reliée au port d'entrée 7 du gaz de synthèse à traiter et, d'autre part, a N orifices, N étant supérieur à 2, en communication avec le volume intérieur de l'enceinte d'introduction 1.

## Revendications

1. Dispositif de traitement d'un gaz de synthèse, **caractérisé en ce que** ledit dispositif comporte :
- une enceinte d'introduction (1) à laquelle est relié un réacteur (2), ladite enceinte d'introduction (1) et ledit réacteur (2) ayant chacun un volume interne délimité par des parois recouvertes au moins partiellement d'éléments réfractaires, ladite enceinte (1) et ledit réacteur (2) étant en communication de fluide,
- ladite enceinte d'introduction (1) comportant une torche plasma (3) à arc non transféré ayant un axe principal, ladite torche étant destinée à générer un dard plasma (4) ayant un axe de propagation (5) sensiblement colinéaire avec l'axe principal de ladite torche,
- ladite enceinte d'introduction (1) comportant un port d'entrée (7) placé en aval de ladite torche plasma (3) pour l'introduction d'un gaz de synthèse de manière à assurer son mélange avec ledit dard plasma (4),
- ledit réacteur (2) ayant une forme allongée sensiblement cylindrique, l'axe longitudinal dudit réacteur (2) étant sensiblement colinéaire avec l'axe de propagation dudit dard plasma (4), ledit réacteur (2) comportant dans sa partie aval un port de sortie (10) dudit gaz de sortie, et **en ce que**
- ladite enceinte d'introduction (1) comportant une chambre de distribution (27) entourant le volume interne de cette enceinte, ladite chambre de distribution (27) étant d'une part reliée à un port d'entrée (7) destiné à recevoir le gaz de synthèse à traiter et d'autre part comportant N orifices (28-30), N étant supérieur à 2, en communication avec le volume interne de ladite enceinte pour y distribuer le gaz de synthèse avec des vitesses d'écoulement uniformisées par ladite chambre de distribution (27).

2. Dispositif selon la revendication 1, **caractérisé en ce que** chacun des N orifices (28-30) de la chambre de distribution (27) ayant un axe principal, chaque axe principal a une direction distincte de l'axe de propagation dudit dard plasma (4) pour établir une zone de mélange turbulent entre ce dard plasma (4) et ledit gaz de synthèse.

3. Dispositif selon la revendication 1 ou 2, **caractérisé en ce qu'**il comporte au moins un injecteur de fluide (8) pour ajuster la composition dudit gaz de synthèse à traiter, ledit au moins un injecteur (8) étant destiné à introduire ledit fluide sensiblement dans la direction de l'écoulement du mélange gaz de synthèse/dard plasma.

4. Dispositif selon l'une quelconque des revendications 1 à 3, **caractérisé en ce que** lesdits injecteurs (8) étant placés dans la partie aval de ladite enceinte d'introduction (1) et/ou dans la partie amont dudit réacteur (2), ladite partie aval comporte une portion évasée (9) dans le sens dudit axe de propagation (5) pour diminuer la vitesse dudit mélange gaz de synthèse/dard plasma et optimiser l'injection dudit fluide.

5. Dispositif selon l'une quelconque des revendications 1 à 4, **caractérisé en ce que** ladite enceinte d'introduction (1) et ledit réacteur (2) comportent des orifices d'injection d'un fluide de protection, ces orifices étant reliés à un circuit d'injection dudit fluide.

6. Dispositif selon l'une quelconque des revendications 1 à 5, **caractérisé en ce que** ledit dard plasma (4) ayant un diamètre d, lesdits orifices d'introduction dudit gaz de synthèse ont un diamètre D est tel que D/d est supérieur ou égal à 10.

7. Dispositif selon l'une quelconque des revendications 1 à 6, **caractérisé en ce que** ledit port de sortie (10) est relié à au moins un moyen de figeage (15, 16) dudit gaz de sortie.

8. Système de traitement de déchets ou de biomasse comprenant au moins un premier étage de traitement des déchets ou de la biomasse recevant lesdits déchets ou ladite biomasse et générant un gaz de synthèse et un deuxième étage de traitement couplé audit premier étage pour recevoir ledit gaz de synthèse, **caractérisé en ce que** ledit deuxième étage étant un dispositif de traitement dudit gaz de synthèse selon l'une quelconque des revendications 1 à 7.

9. Système de production d'énergie électrique à partir de déchets ou de biomasse comprenant au moins une turbine à gaz (21) ou au moins un moteur à gaz, **caractérisé en ce que** ledit système de production d'énergie électrique est équipé d'un système de traitement de déchets ou de biomasse selon la revendication 8 et **en ce que** ladite au moins une turbine à gaz (21), ou ledit au moins un moteur à gaz, est actionnée par ledit gaz de sortie généré par ledit système de traitement de déchets ou de biomasse.

10. Système de production d'énergie électrique selon la revendication 9, **caractérisé en ce que** ladite au moins une turbine à gaz (21) ou ledit au moins un moteur à gaz générant un gaz d'échappement, ledit système comprend un circuit de rebouclage (23) relié d'une part à ladite au moins une turbine à gaz (21) ou ledit au moins un moteur à gaz pour récupérer ledit gaz d'échappement et d'autre part, à au moins un des éléments choisis dans le groupe comprenant au moins un injecteur (8), au moins un orifice d'injection, ladite torche à plasma (3) et une combinaison de ces éléments pour introduire ledit gaz d'échappement dans ledit dispositif de traitement, ledit circuit de rebouclage (23) comportant un compresseur pour comprimer ledit gaz d'échappement avant introduction dans ledit dispositif.

11. Système de production d'un carburant de synthèse à partir de déchets ou de biomasse, ledit système comprenant au moins un réacteur catalytique, **caractérisé en ce que** ledit système est équipé d'un système de traitement de déchets ou de biomasse selon la revendication 8.

12. Système de production d'un polymère de synthèse à partir de déchets ou de biomasse, ledit système comprenant au moins un réacteur catalytique, **caractérisé en ce que** ledit système est équipé d'un système de traitement de déchets ou de biomasse selon la revendication 8.

13. Système selon la revendication 11 ou 12, **caractérisé en ce que** ledit réacteur catalytique générant un produit gazeux résiduel, ledit système comprend un circuit de rebouclage relié d'une part audit réacteur catalytique pour récupérer ledit produit gazeux résiduel et d'autre part, à au moins un des éléments choisis dans le groupe comprenant au moins un injecteur, au moins un orifice d'injection, ladite torche à plasma et une combinaison de ces éléments pour introduire ledit produit gazeux dans ledit dispositif de traitement, ledit circuit de rebouclage comportant un compresseur pour comprimer ledit produit gazeux résiduel avant introduction dans ledit dispositif.

## Patentansprüche

1. Vorrichtung zum Verarbeiten eines Synthesegases, **dadurch gekennzeichnet, dass** die Vorrichtung Folgendes umfasst:
- einen Einführungsbehälter (1), mit dem ein Reaktor (2) verbunden ist, wobei der Einführungsbehälter (1) und der Reaktor (2) jeweils ein Innenvolumen aufweisen, das durch Wände begrenzt ist, die mindestens teilweise mit feuerfesten Elementen beschichtet sind, wobei der Behälter (1) und der Reaktor (2) in fluidischer Verbindung stehen,
- wobei der Einführungsbehälter (1) einen Plasmabrenner (3) mit nicht übertragenem Bogen mit einer Hauptachse umfasst, wobei der Brenner ausgelegt ist, um einen Plasmastrahl (4) mit einer Ausbreitungsachse (5) zu generieren, die im Wesentlichen kollinear mit der Hauptachse des Brenners ist,
- wobei der Einführungsbehälter (1) einen Eingangsanschluss (7), der nachgelagert von dem Plasmabrenner (3) angeordnet ist, zur Einführung eines Synthesegases umfasst, um seine Mischung mit dem Plasmastrahl (4) sicherzustellen,
- wobei der Reaktor (2) eine verlängerte, im Wesentlichen zylindrische Form aufweist, wobei die Längsachse des Reaktors (2) im Wesentlichen kollinear mit der Ausbreitungsachse des Plasmastrahls (4) ist, wobei der Reaktor (2) in seinem nachgelagerten Teil einen Ausgangsanschluss (10) des Ausgangsgases umfasst, und dadurch, dass
- der Einführungsbehälter (1) eine Verteilungskammer (27) umfasst, die das Innenvolumen dieses Behälters umgibt, wobei die Verteilungskammer (27) einerseits mit einem Eingangsanschluss (7) verbunden ist, der ausgelegt ist, um das zu behandelnde Synthesegas aufzunehmen, und andererseits N Öffnungen (28 - 30) umfasst, wobei N größer als 2 ist, in Kommunikation mit dem Innenvolumen des Behälters, um dort das Synthesegas mit Strömungsgeschwindigkeiten zu verteilen, die durch die Verteilungskammer (27) vereinheitlicht sind.

2. Vorrichtung nach Anspruch 1, **dadurch gekennzeichnet, dass** jede der N Öffnungen (28 - 30) der Verteilungskammer (27) eine Hauptachse aufweist, wobei jede Hauptachse eine verschiedene Richtung von der Verteilungsachse des Plasmastrahls (4) aufweist, um einen wirbelnden Mischbereich zwischen diesem Plasmastrahl (4) und dem Synthesegas festzusetzen.

3. Vorrichtung nach Anspruch 1 oder 2, **dadurch gekennzeichnet, dass** sie mindestens eine Fluid-Injektionsvorrichtung (8) umfasst, um die Zusammensetzung des zu behandelnden Synthesegases einzustellen, wobei die mindestens eine Injektionsvorrichtung (8) ausgelegt ist, um das Fluid im Wesentlichen in der Strömungsrichtung der Mischung Synthesegas/Plasmastrahl einzuführen.

4. Vorrichtung nach einem der Ansprüche 1 bis 3, **dadurch gekennzeichnet, dass** die Injektionsvorrichtungen (8) im nachgelagerten Teil des Einführungsbehälters (1) und/oder im vorgelagerten Teil des Reaktors (2) angeordnet sind, wobei der nachgelagerte Teil einen erweiterten Abschnitt (9) hin zu der Verteilungsachse (5) umfasst, um die Geschwindigkeit der Mischung Synthesegas/Plasmastrahl zu verringern und die Injektion des Fluids zu optimieren.

5. Vorrichtung nach einem der Ansprüche 1 bis 4, **dadurch gekennzeichnet, dass** der Einführungsbehälter (1) und der Reaktor (2) Öffnungen zur Injektion eines Schutzfluids umfassen, wobei diese Öffnungen mit einem Injektionskreislauf des Fluids verbunden sind.

6. Vorrichtung nach einem der Ansprüche 1 bis 5, **dadurch gekennzeichnet, dass**, da der Plasmastrahl (4) einen Durchmesser d aufweist, die Öffnungen zur Einführung des Synthesegases einen Durchmesser D aufweisen, so dass D/d größer als oder gleich 10 ist.

7. Vorrichtung nach einem der Ansprüche 1 bis 6, **dadurch gekennzeichnet, dass** der Ausgangsanschluss (10) mit mindestens einem Stockungsmittel (15, 16) des Ausgangsgases verbunden ist.

8. System zur Behandlung von Abfall oder von Biomasse, umfassend mindestens einen ersten Schritt des Behandelns von Abfall oder von Biomasse, der den Abfall oder die Biomasse aufnimmt und ein Synthesegas generiert, und einen zweiten Schritt des Behandelns, der mit dem ersten Schritt gekoppelt ist, um das Synthesegas aufzunehmen, **dadurch gekennzeichnet, dass** der zweite Schritt eine Vorrichtung zur Behandlung des Synthesegases gemäß einem beliebigen der Ansprüche 1 bis 7 ist.

9. System zur Produktion von elektrischer Energie auf der Grundlage von Abfall oder von Biomasse, umfassend mindestens eine Gasturbine (21) oder mindestens einen Gasmotor, **dadurch gekennzeichnet, dass** das System zur Produktion von elektrischer Energie mit einem System zur Behandlung von Abfall oder von Biomasse nach Anspruch 8 ausgestattet ist, und dadurch, dass die mindestens eine Gasturbine (21) oder der mindestens eine Gasmotor durch das Ausgangsgas betätigt wird, das durch das System zur Behandlung von Abfall oder von Biomasse generiert wird.

10. System zur Produktion von elektrischer Energie nach Anspruch 9, **dadurch gekennzeichnet, dass** die mindestens eine Gasturbine (21) oder der mindestens eine Gasmotor ein Abgas generieren, das System einen Rückkoppelungskreislauf (23) umfasst, der einerseits mit der mindestens einen Gasturbine (21) oder dem mindestens einem Gasmotor verbunden ist, um das Abgas aufzunehmen, und andererseits mit mindestens einem der Elemente, ausgewählt aus den Gruppe, bestehend aus mindestens einer Injektionsvorrichtung (8) mindestens einer Injektionsöffnung, dem Plasmabrenner (3) und einer Kombination dieser Elemente, um das Abgas in die Vorrichtung zur Behandlung einzuführen, wobei der Rückkoppelungskreislauf (23) einen Kompressor umfasst, um das Abgas von der Einführung in die Vorrichtung zu komprimieren.

11. System zur Produktion eines Synthesekraftstoffs auf der Grundlage von Abfall oder von Biomasse, wobei das System mindestens einen katalytischen Reaktor umfasst, **dadurch gekennzeichnet, dass** das System mit einem System zur Behandlung von Abfällen oder von Biomasse gemäß Anspruch 8 ausgestattet ist.

12. System zur Produktion eines Synthesepolymers auf der Grundlage von Abfall oder von Biomasse, wobei das System mindestens einen katalytischen Reaktor umfasst, **dadurch gekennzeichnet, dass** das System mit einem System zur Behandlung von Abfall oder von Biomasse gemäß Anspruch 8 ausgestattet ist.

13. System nach Anspruch 11 oder 12, **dadurch gekennzeichnet, dass** der katalytische Reaktor ein gasförmiges Restprodukt generiert, das System einen Rückkoppelungskreislauf umfasst, das einerseits mit dem katalytischen Reaktor verbunden ist, um das gasförmige Restprodukt rückzugewinnen, und andererseits mit mindestens einem der Elemente, ausgewählt aus den Gruppe, bestehend aus mindestens einer Injektionsvorrichtung, mindestens einer Injektionsöffnung, dem Plasmabrenner und einer Kombination dieser Elemente, um das gasförmige Produkt in die Vorrichtung zur Behandlung einzuführen, wobei der Rückkoppelungskreislauf einen Kompressor umfasst, um das gasförmige Produkt vor der Einführung in die Vorrichtung zu komprimieren.

## Claims

1. Device for the treatment of a syngas, **characterised in that** said device comprises:
- a feed chamber (1) to which is connected a reactor (2), said feed chamber (1) and said reactor (2) each having an internal volume delimited by walls covered at least partially with refractory elements, said chamber (1) and said reactor (2) being in fluidic communication,
- said feed chamber (1) comprising a non-transferred-arc plasma torch (3) having a main axis, with said torch intended to generate a plasma jet (4) having a propagation axis (5) substantially collinear with the main axis of said torch,
- said feed chamber (1) comprising an input port (7) placed downstream of said torch plasma (3) for the feeding of a syngas in such a way as to ensure that it is mixed with said plasma jet (4),
- said reactor (2) having a substantially cylindrical elongate shape, the longitudinal axis of said reactor (2) being substantially collinear with the propagation axis of said plasma jet (4), said reactor (2) comprising in its downstream portion an output port (10) of said output gas, and **in that**
- said feed chamber (1) comprising a distribution chamber (27) surrounding the internal volume of this chamber, said distribution chamber (27) being on the one hand connected to an input port (7) intended to receive the syngas to be treated and on the other hand comprising N orifices (28-30), with N being greater than 2, in communication with the internal volume of said chamber in order to distribute therein the syngas with flow speeds standardised by said distribution chamber (27).

2. Device according to claim 1, **characterised in that** each one of the N orifices (28-30) of the distribution chamber (27) having a main axis, each main axis has a direction separate from the propagation axis of said plasma jet (4) in order to establish a turbulent mixing zone between this plasma jet (4) and said syngas.

3. Device according to claim 1 or 2, **characterised in that** it comprises at least one fluid injector (8) in order to adjust the composition of said syngas to be treated, said at least one injector (8) intended to feed said fluid substantially in the direction of the flow of the syngas/plasma jet mixture.

4. Device according to any of claims 1 to 3, **characterised in that** said injectors (8) being placed in the downstream portion of said feed chamber (1) and/or in the upstream portion of said reactor (2), said downstream portion comprises a flared portion (9) in the direction of said propagation axis (5) in order to reduce the speed of said syngas/plasma jet mixture and optimise the injection of said fluid.

5. Device according to any of claims 1 to 4, **characterised in that** said feed chamber (1) and said reactor (2) comprise orifices for injecting a protection fluid, with these orifices being connected to a circuit for injecting said fluid.

6. Device according to any of claims 1 to 5, **characterised in that** said plasma jet (4) having a diameter d, said orifices for feeding said syngas have a diameter D, that is such that D/d is greater than or equal to 10.

7. Device according to any of claims 1 to 6, **characterised in that** said output port (10) is connected to at least one means of fixing (15, 16) said output gas.

8. System for treating waste or biomass comprising at least one first stage for treating waste or biomass receiving said waste or said biomass and generating a syngas and a second stage for treatment coupled to said first stage in order to receive said syngas, **characterised in that** said second stage is a device for treating said syngas according to any of claims 1 to 7.

9. System for producing electrical energy from waste or biomass comprising at least one gas turbine (21) or at least one gas engine, **characterised in that** said system for the production of electrical energy is provided with a waste or biomass treatment system according to claim 8 and **in that** said at least one gas turbine (21), or said at least one gas engine, is actuated by said output gas generated by said waste or biomass treatment system.

10. System for producing electrical energy according to claim 9, **characterised in that** said at least one gas turbine (21) or said at least one gas engine generating an exhaust gas, said system comprises a loopback circuit (23) connected on the one hand to said at least one gas turbine (21) or said at least one gas engine in order to recover said exhaust gas and on the other hand, to at least one of the elements chosen from the group comprising at least one injector (8), at least one injection orifice, said plasma torch (3) and a combination of these elements in order to feed said exhaust gas into said treatment device, said loopback circuit (23) comprising a compressor for compressing said exhaust gas before feeding into said device.

11. System for producing a synthetic fuel from waste or biomass, said system comprising at least one catalytic reactor, **characterised in that** said system is provided with a waste or biomass treatment system according to claim 8.

12. System for producing a synthetic polymer from waste or biomass, said system comprising at least one catalytic reactor, **characterised in that** said system is provided with a waste or biomass treatment system according to claim 8.

13. System according to claim 11 or 12, **characterised in that** said catalytic reactor generates a residual gas product, said system comprises a loopback circuit connected on the one hand to said catalytic reactor in order to recover said residual gas product and on the other hand, to at least one of the elements chosen from the group comprising at least one injector, at least one injection orifice, said plasma torch and a combination of these elements in order to feed said gaseous product into said treatment device, said loopback circuit comprising a compressor for compressing said residual gas product before feeding into said device.
